**Europäisches Patentamt**

**European Patent Office**

**Office européen des brevets**

(19)

(11) Publication number : **0 467 527 A2**

(12)

# EUROPEAN PATENT APPLICATION

(21) Application number : **91305412.8**

(22) Date of filing : **14.06.91**

(51) Int. Cl.⁵ : **G06F 15/38**

(30) Priority : **15.06.90 JP 155570/90**

(43) Date of publication of application :
**22.01.92 Bulletin 92/04**

(84) Designated Contracting States :
**DE FR GB**

(71) Applicant : **International Business Machines
Corporation
Old Orchard Road
Armonk, N.Y. 10504 (US)**

(72) Inventor : **Nagao, Katashi
587-1 Kami-odanaka
Nakahara-ku, Kawasaki-shi (JP)**
Inventor : **Nomiyama, Hiroshi
4-1-50 Saginuma
Miyamae-ku, Kawasaki-shi (JP)**

(74) Representative : **Killgren, Neil Arthur
IBM United Kingdom Limited Intellectual
Property Department Hursley Park
Winchester Hampshire SO21 2JN (GB)**

(54) **Natural language apparatus and method and construction of a knowledge base for natural language analysis.**

(57) A natural language analysis apparatus comprises : knowledge base means for storing first-type trees representing dependencies among words in sentences, and second-type trees representing taxonym relationships of words ; table means responsive to entry of a word to output ID data of said first-type tree in which said word appears, node location data of said word in said first-type tree, and to output ID data of said second-type tree in which said word is contained as a hyponym ; means for judging the structural ambiguity of an incoming sentence ; means for extracting a candidate pair of modifier and modifiee for each possible dependency for a sentence judged to be ambiguous structurally ; means for entering words comprising each said pair into said table means and for determining, on the basis of the output data, a path including said words at opposite ends and including some of the words appearing in the first-type tree ; means for calculating a path distance for each said pair ; and means for determining a most preferable dependency on the basis of said path distance calculated for each.

EP 0 467 527 A2

INCOMING SENTENCE

SYNTACTIC ANALYZER
(PARSER)

PHRASE STRUCTURE
INCLUDING AMBIGUITY

DEPENDENCY ANALYZER

DEPENDENCY
STRUCTURE
BUILDER

DEPENDENCY
EXTRACTOR

DEPENDENCY
SELECTOR

DEPENDENCY
STRUCTURE
TRANSFORMER

KNOWLEDGE BASE

DEPENDENCY/
TAXONYM/
SYNONYM DATA

CONTEXT
DEPENDENCY
DATA

DEPENDENCY STRUCTURE
WITHOUT AMBIGUITY

SYSTEM FOR NATURAL LANGUAGE APPLICATION
SUCH AS MACHINE TRANSLATION

FIG. 1

The present invention relates to an apparatus and a method for resolving structural ambiguities in sentences of a natural, and to a method of constructing a knowledge base for resolving such structural ambiguities.

The term "words" here signifies nouns, verbs, adjectives, adverbs, and other semantic words, and excludes articles, prepositions, and other functional words. A semantic unit of successive words is also regarded as one word in some fields. For example, in documents related to computer technology the expression "virtual disk" is regarded as one word. The term "dependency" means a modifier-modifiee relationship among words.

Resolution of structural ambiguities in sentences is a difficult problem for natural language processing systems. An example of the problem is provided by prepositional phrase attachment ambiguities. The sentence "A user can log on the system with a password" is ambiguous as to whether the prepositional phrase "with a password" is attached adverbially to the verb "log on," or as a postmodifier to the noun phrase "the system."

Methods have been proposed for resolving structural ambiguities of sentences on the basis of sematic and functional information on words, phrases, and other consituent elements. One such method is theoretically based on the case grammar disclosed in an article entitled "Toward a modern theory of case" by Charles J. Fillmore on pp. 361-375 of "Modern Studies in English," published in 1969 by Prentice-Hall. The functions of the constituent elements of a sentence for a predicate are called cases, and semantic case functions are specifically called semantic cases (see attached Table 1).

In case grammar, each constituent element of a sentence is called a case element, and the adequacy of a sentence is evaluated by matching the cases and the case elements. Taking the above-indicated sentence as an example, the term "log on" is a predicate, while "a user" functions as an agent, "the system" as an object, and "a password" as an instrument. Each verb is assigned to a framework called a case frame in which the case of each verb and the constraint conditions of case elements with respect to the verb are defined. Any input outside the definition is rejected as being semantically inadequate. In practical language usage, however, the boundary between semantically acceptable and non- acceptable sentences is a delicate one, and this also depends on the context. For example, in the sentence "My car drinks gasoline," if the predicate "drink" only accepts a word indicative of a human (a word having the semantic attribute HUM) as its agent, the term "car" is rejected. However, if "car" is considered to be used metaphorically, it is accepted. Thus, in a case grammar system that uses attribute values can easily construct knowledge but is limited in application.

Japanese Published Unexamined Patent Application 63- 91776 discloses a method of using statistical information on the frequency of words to calculate the degree of preference of syntactic analysis trees for solving structural ambiguities. The method is described below.

1. Multiple analysis trees are produced from an input sentence, and an acceptable one is selected from among them. However, making multiple parse trees can be difficult and time-consuming. Futhermore, the method uses information on words that are not closely related to the ambiguities.

2. The statistical frequency of co-occurrence relationships between words is used to solve ambiguities. Therefore, individual exceptions cannot be dealt with. For example, when an ambiguity exists as to whether a certain word A modifies word B or word C, the method does not consider that although it is statistically usual for A to modify B, in a certain particular sentence it modifies C. Further, since the method requires sufficiently formalised data (for example, registration of "virtual machine" as "machine is virtual"), collecting data is costly in terms of processing time.

3. Natural languages generally comprise an enormous number of words. Therefore, in order to extend coverage range, the method abstracts words to define a category called a semantic marker. However, the semantic marker must be rearranged for a different field. For example, the term "department" is classified into the category of organisation in a certain field P, and knowledge on the attachments of "department" is absorbed into statistical information on co-occurrence relationships between the organisation category and another category. However, when the term "department" is classified into another category in a different field Q, the knowledge in field P is useless in field Q. It is costly in terms of processing time to re-abstract words and re-collect statistical information for each field.

Structural ambiguity, which is the greatest bottleneck in analysis of natural language sentences, is caused by the presence of multiple modifier-modifiee relationships (dependencies) among words. Such structural ambiguity cannot be solved by grammatical knowledge alone, but requires semantic processing. In practice, semantic processing in natural language processing involves both efficiently constructing a requisite large-scale knowledge, and efficiently using that knowledge.

In accordance with the present invention, there is now provided apparatus for natural language analysis, the apparatus comprising: knowledge base means for storing first-type trees representing dependencies among words in sentences, and second-type trees representing taxonym relationships of words; table means responsive to entry of a word to output ID data of said first-type tree in which said word appears, node location data of said word in said first-type tree, and to output ID data of said second-type tree in which said word is contained as a hyponym; means for judging the structural ambiguity of an incoming sentence; means for extracting a can-

EP 0 467 527 A2

didate pair of modifier and modifiee for each possible dependency for a sentence judged to be ambiguous structurally; means for entering words comprising each said pair into said table means and for determining, on the basis of the output data, a path including said words at opposite ends and including some of the words appearing in the first-type tree; means for calculating a path distance for each said pair; and means for determining a most preferable dependency on the basis of said path distance calculated for each.

The present invention therefore overcomes the structural ambiguity by preliminarily defining dependencies among words as background knowledge and referring to the background knowledge in order to select an adequate dependency among candidate dependencies. More specifically, when natural language analysing apparatus of the present invention obtains a structure including multiple attachment candidates as a result of syntactic analysis of a sentence, the degree of preference of dependencies among words in the sentence is also obtained, based on the dependencies among the words stored as the background knowledge. The apparatus can therefore determine which attachment is more preferable.

Viewing the present invention from a second aspect, there is provided a system for natural language analysis, the system comprising: knowledge base means for storing first-type trees representing dependencies among words in sentences, and second-type trees representing taxonym relationships of words; table means responsive to entry of a word to output ID data of said first-type tree in which said word appears, node location data of said word in said first-type tree, and ID data of said second-type tree in which said word is contained as a hyponym; means for judging the structural ambiguity of an incoming sentence; means for extracting a candidate pair of modifier and modifiee for each possible dependency for a sentence judged to be ambiguous structurally; means for entering words comprising each said pair into said table means and determining, on the basis of the output data, a path including said words at opposite ends and including some of the words appearing in the first-type tree; means for calculating a path distance for each said pair; and means for determining a most preferable dependency on the basis of said path distance calculated for each.

Advantageously, a natural language analysis system of the present invention can be used for sentence analysis in, for example, machine translation systems, and question-and-answer systems using natural languages, to output the most preferable syntactic tree in response to an incoming sentence that includes structural ambiguities, by using knowledge on synonym relationships, taxonym relationships, and dependencies among words. Such a system can thus solve problems that cannot be solved by conventional grammar-based analysis, such as ambiguities that can only be solved by the use of expert knowledge in a specific field or by referring to the contents of a preceding sentence.

A common characteristic of conventional analysis methods is that information relating to a word in a sentence, such as attributes for semantic classification, is very abundant and that this information is heuristically determined by human beings. In contrast, information required for a natural language analysis method of the present invention is described relatively formally, and large-scale new background knowledge can be constructed automatically or semiautomatically, thus making it relatively easy to construct apparatus of the present invention.

Specifically, a natural language analysis system of the present invention resolves structural ambiguities by initially expressing knowledge in the form of a tree structure indicative of synonym relationships, taxonym relationships, and dependencies among words. When a sentence is entered, the system searches for dependencies among words defined by the background knowledge, using synonym relationships and taxonym relationships. Subsequently, using a consistency condition obtained from the sentence and one obtained from the context, the system selects the most acceptable attachment and solves the ambiguity. The decided dependency structure is registered in the knowledge base as context dependency data.

The system can comprise means for storing in said knowledge base means a first-type tree for the incoming sentence including said most preferable dependency, and for renewing said table means responsively. The knowledge base means can separately store learned data and context data added by said means for determining. The table means can be separately prepared for learned data and for context data. The means for calculating can calculate said distance, based on the number of dependencies included in the path. The first type tree can be provided with semantic case data for each dependency.

In a preferred embodiment of the present invention, the means for calculating calculates said distance according to the consistency between the case relationship between a modifier and a candidate modifiee and the case relationship for the path. In another preferred embodiment of the present invention, the means for calculating can calculate said distance, on the basis of the consistency of co-occurrence of a word included in said incoming sentence and a word included in said first-type tree for the path. In yet another preferred embodiment of the present invention, the means for calculating calculates said distance, on the basis of the degree of consistency between the path and a first-type tree added by said means for determining.

Preferably, said second-type tree is an "isa" tree having only two nodes corresponding to a hypernym and a hyponym, wherein said means for entering is responsive to an output of a hypernym of a word forming the

4

pair, to iterate search for an "isa" tree including said hypernym as a hyponym, thereby producing a chain of hypernyms. A synonym relationship is preferably represented by two "isa" trees.

Viewing the present invention from a third aspect, there is provided, in a computer system including a knowledge base that stores first-type trees representing dependencies among words in sentences and second-type trees representing taxonym relationships of words, and including a table responsive to entry of a word for outputting ID data of said first-type tree in which said word appears, node location data of said word in said first-type tree, and ID data of said second-type tree in which said word appears as a hyponym, a natural language analysis method comprising the steps of: (a) judging the structural ambiguity of an incoming sentence; (b) extracting a candidate pair of modifier and modifiee for each possible dependency as for a sentence judged to be structurally ambiguous; (c) entering words comprising each pair into said table means and determining, on the basis of the output data, a path that has said words at opposite ends and contains some of the words appearing in said first-type tree; (d) calculating a path distance for each pair; and (e) determining the most preferable dependency relationship, on the basis of said path distance calculated for each said pair.

Preferably, the method further comprises the step of: (h) storing in said knowledge base a first-type tree for the incoming sentence including said most preferable dependency determined by said step (e) and renewing said table responsively. The knowledge base preferably stores learned data and context data added by said step (f) separately. Preferably, the table can separately prepared for learned data and context data. Step (d) preferably calculates said distance, on the basis of the number of dependencies included in the path. The first first-type tree is preferably provided with semantic case data for each dependency.

In a preferred example of a method according to the present invention, step (d) calculates said distance according to the consistency between the case relationship of a modifier and a candidate modifiee and the case relationship for the path. In another preferred example step (d) calculates said distance according to the co-occurrence consistency of a word included in said input sentence and a word included in said first-type tree for the path. In still another preferred example, step (d) calculates said distance according to the degree of consistency between the path and a first-type tree added by said step (f).

The second-type tree is preferably an "isa" tree having only two nodes corresponding to a hypernym and a hyponym, and wherein said step (c) is responsive to an output of a hypernym of a word forming the pair, to iterate search for an "isa" tree including said hypernym as a hyponym, thereby producing a chain of hypernyms. Preferably, a synonym relationship is represented by two "isa" trees.

Viewing the present invention from a fourth aspect, there is provided a method for constructing a knowledge base for natural language analysis comprising the steps of: (a) preparing a knowledge base that stores trees representing dependencies among words in sentences; (b) determining the most preferable of the possible dependencies for an incoming sentence by using said knowledge base; and (c) storing in said knowledge base a tree for the incoming sentence that includes said most preferable dependency. Preferably, said knowledge base separately stores learned data and context data added by said step (c).

Viewing the present invention from a fifth aspect, there is provided a method of constructing a knowledge base for natural language analysis comprising the steps of: (a) preparing a knowledge base for storing trees representing dependencies among words in sentences and preparing a table responsive to entry of a word for outputting ID data of a tree containing said word and node location data of said word in said tree; (b) determining the most preferable of the possible dependencies for an incoming sentence by using said knowledge base and said table; and (c) storing in said knowledge base a tree for the incoming sentence that includes said most preferable dependency and renewing said table responsively. Preferably, said table is separately prepared for learned data and for context data.

An embodiment of the present invention will now be described with reference to the accompanying drawings in which:

Figure 1 is an explanatory view of an arrangement of a natural language analysing system according to the invention;

Figure 2 is an explanatory view of a phrase structure including ambiguities;

Figure 3 is an explanatory view of a dependency structure including ambiguities;

Figure 4 is an explanatory view of possible dependency candidates;

Figure 5 is an explanatory view of an example of phrase structure;

Figure 6 is an explanatory view of an example of dependency structure;

Figure 7 is an explanatory view of dependencies and semantic cases;

Figure 8 is an explanatory view of a taxonym relationship;

Figure 9 is an explanatory view of a synonym relationship;

Figure 10 is an explanatory view of a path;

Figure 11 is an explanatory view of the node location of a word on a dependency structure tree;

Figure 12 is an explanatory view of an "isa" tree;

Figure 13 is an explanatory view of a transition of a dependency;

Figure 14 is an explanatory view of a path from word c to word a;

Figure 15 is an explanatory view of the dependency between "keep" and "virtual disk";

Figure 16 is an explanatory view of a path from "virtual disk" to "keep" ;

Figure 17 is an explanatory view of a co-occurrence relationship;

Figure 18 is an explanatory view of the dependency structure in a knowledge base;

Figure 19 is an explanatory view of a co-occurrence relationship in the knowledge base;

Figure 20 is an explanatory view of the taxonym relationship in the knowledge base;

Figure 21 is an explanatory view of the co-occurrence relationship between path and a sentence;

Figure 22 is an explanatory view of a dependency structure of context data; and

Figure 23 is an explanatory view of a path in the context data.

Figure 24 is a block diagram of a computer system for implementing the natural language analysing system of the present invention.

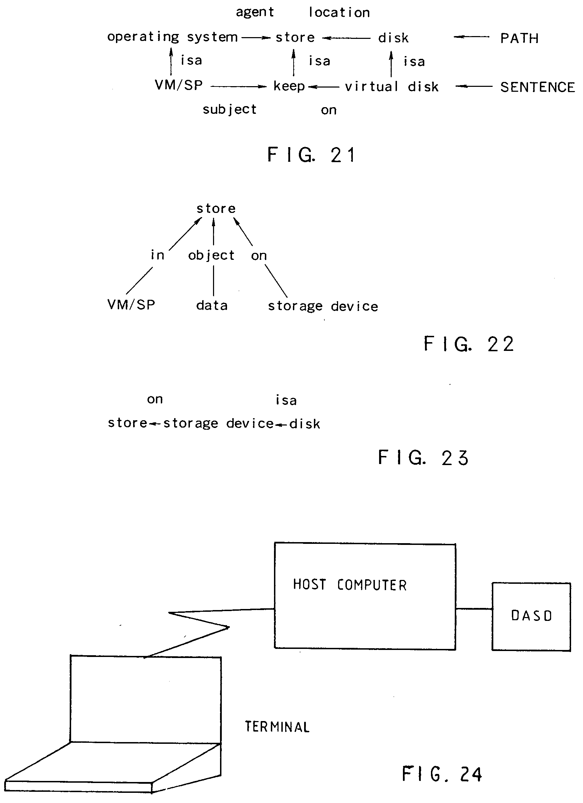

Referring first to Figure 24, an example of a computer system for implementing a natural language analysis system of the present invention comprises a processor connected to a direct access data storage device (DASD) and a visual display terminal having a keyboard. In use, the DASD stores a computer program for configuring the computer system as a natural language analysis of the present invention. A user can operate the analysis system via the visual display terminal.

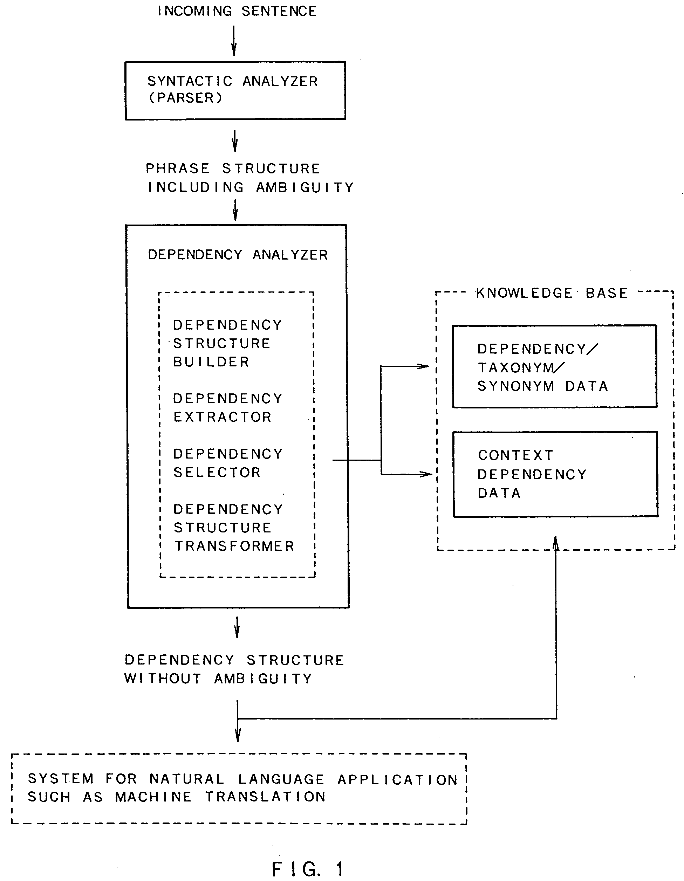

Elements of the analysis system of the present invention will now be described with reference to Figure 1. The system will be described in relation to the English language. However, it will be appreciated that the present invention not limited to any specific language.

SYNTACTIC ANALYSER

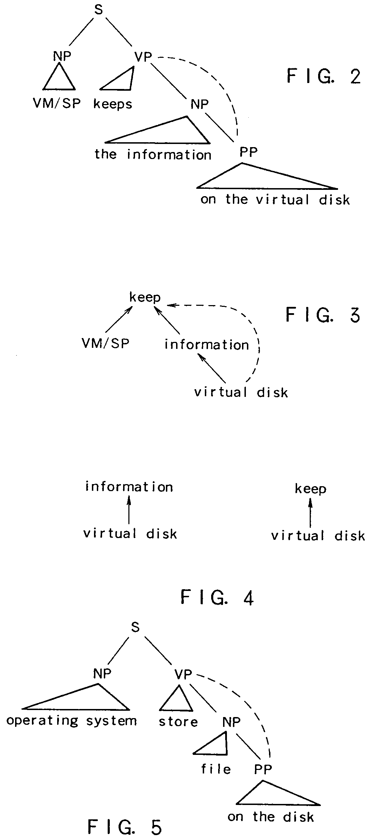

The syntactic analyser receives a sentence and outputs a syntactic structure involving ambiguities. The sentence "VM/SP keeps the information on the virtual disk" is syntactically analysed into a phrase structure involving attachment ambiguities, as shown in Figure 2. Syntactic analysis technology is not involved in the present invention, and its explanation is omitted.

DEPENDENCY STRUCTURE ANALYSER

This comprises a dependency structure builder, a dependency extractor, a dependency selector, and a dependency structure transformer.

The dependency structure builder converts a phrase structure into a dependency structure explicitly indicating dependencies between words, as shown in Figure 3. The phrase structure attachment ambiguities are expressed as ambiguities in dependencies among words. The dependencies are provided with labels corresponding to semantic cases. These labels are determined by referring to the grammatical word sequence and prepositions, and are expressed as a candidate list of possible semantic cases.

The dependency extractor extracts ambiguous dependencies from the created dependency structure as shown in Figure. 4. They are expressed as multiple possible candidate dependencies for one ambiguity.

The dependency selector searches for relationships corresponding to possible dependency candidates in the background knowledge. When relationships are found for two or more candidates, the most preferable relationship is determined by using constraint conditions. This is explained later.

The dependency structure transformer selects the most likely dependency for each ambiguity and accordingly transforms the dependency structure to resolve the structural ambiguity. In this case, the semantic case attached to the dependency is also determined uniquely. The output of the dependency structure analyser is the dependency structure of a sentence in which every ambiguity has been resolved. The determined dependency will be a constraint for analysis of subsequent sentences, and is therefore registered in the knowledge base as context dependency data.

In accordance with the present invention, the natural language processing system comprises a semi- automatically built knowledge base and a mechanism for selecting the best dependency by using the knowledge base. These are explained below.

CONSTRUCTION OF A KNOWLEDGE BASE

From collected information concerning words such as terminology commentary, the system extracts, relationships between a certain word and another word, namely, their synonym relationships, taxonym relationships, and dependencies. These relationships form the knowledge base.

6

The system expresses an item of knowledge in the form of a tree structure, for the following reasons:

1. The tree structure can be made semiautomatically by analysing a sentence.

2. It is suitable for expressing taxonym relationships and dependencies. A synonym relationship is converted into two taxonym relationships, as explained later.

3. Inference for dependency structure analysis is basically a process of traversing up a branch of a tree structure. The knowledge base contains tree structures indicative of dependency structures obtained from a sentence and taxonym relationships obtained by converting the dependency structures. In other words, it is a group of tree structures.

In conventional natural language processing systems, in which necessary information for sentence analysis is not formalised, frames or other means capable of expressing substantially anything have been used successfully. However, such frame expression is difficult to construct systematically, and largely relies upon a human effort. Therefore, increasing the scale of the knowledge base is very laborious.

The knowledge base of the present invention can be built in a bottom-up manner; this makes it easy to increase the scale, and also corresponds to the nature of the problem of structural ambiguities. Naturally, knowledge must be acquired beforehand by learning. The data in the knowledge base is generated by analysing commentaries on words, creating dependency structures, and then converting them. The process is described below.

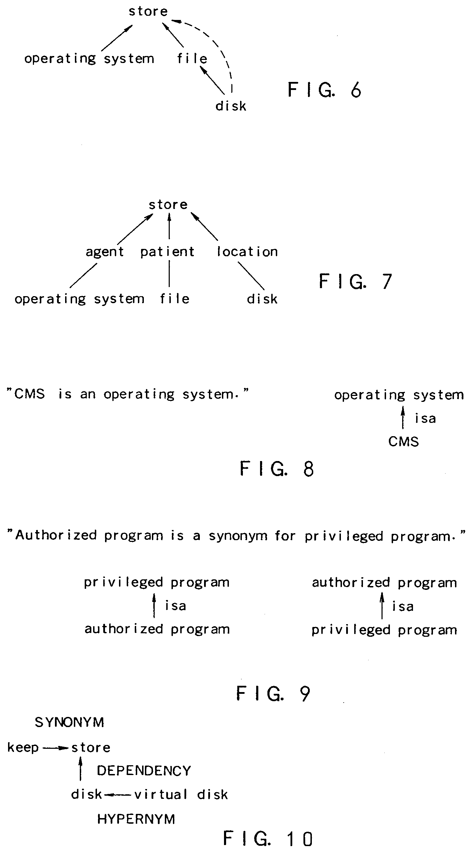

1. The syntactic analyser creates phrase structures from a sentence, and converts them into dependency structures that define attachment relationships among words. In the learning step, a person determines ambiguous attachment relationships, and specifies a structure. For example, from the sentence "Operating system stores files on the disk," the phrase structure shown in Figure 5 is created. It is converted into the dependency structure shown in Figure 6. This is done by the dependency structure builder of the dependency structure analyser.

2. As shown in Figure 7, semantic case labels (agent, patient, location) are attached as attributes to links indicating dependencies among words. This behaves as a constraint condition for use in removing an ambiguity. These labels are unambiguously determined by a person in the learning step after their candidates have been attached by the dependency structure builder.

3. The dependency structure, obtained by sentences indicating a taxonym (hypernym/hyponym) relationship and a synonym relationship between words such as "A is a B," "A is a synonym for B," and so on, is converted into a structure in which A and B are connected by a link labelled with "isa." This structure is called the "isa" tree, and examples are shown in Figures 8 and 9.

SELECTION OF THE MOST PREFERABLE DEPENDENCY

In order to select the most preferable dependency, the system employs a method of (1) searching paths corresponding to respective dependencies (path search) in the knowledge base, and (2) calculating values, called dependency distances for respective paths, on the basis of constraint conditions (distance calculation). The system then selects the dependency corresponding to the path having the shortest dependency distance as the most preferable dependency. This is done by the dependency selector of the dependency structure analyser. The path search first limits the search space in the enormous amount of knowledge by using co-occurrence between words. The probability of occurrence of a single word in a natural language is very small, and thus very little knowledge is needed for two words actually co-occurring. As a result, those words subject to distance calculation, which create the heaviest calculating load, are very few. This results in a very efficient search. The path search and the distance calculation are described below.

1. Path Search

A path between two words incorporates chains of synonyms and hypernyms starting from them and at least one dependency between the words at the ends of the chains. In other words, a path is a route between words if a knowledge base is regarded as a graph with words at its nodes. For example, the path between the words "keep" and "virtual disk" is shown in Figure 10.

The following algorithm has been developed in order to search for paths in a knowledge base. It uses the index table shown in Table 2.

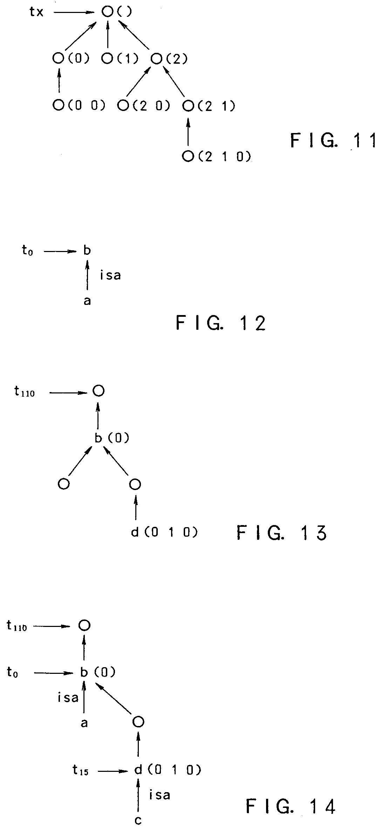

In the table, the symbol tx denotes a pointer of a tree in which the word appears, and values in parentheses indicate the node location of the word in the tree (see Figure 11).

Labels are always affixed to "isa" or other branches as attributes of hyponym nodes; therefore, pointers in the column of "isa tree" indicate a tree in which the word appears at a lower level of the "isa" branch. It is found from the table (Table 2) that word a is located in position (0) of the "isa" tree t0, and word b is located in position () of the same tree t0, as shown in Figure 12.

It is found by traversing up the tree by one node from t0 (0) that word b is a synonym or hypernym for word a. By similarly reviewing the column of the "isa" tree for word b, all the words linked to word a by the "isa" labelled branches are found. By similarly traversing up the "isa" tree by one node, the synonym or hypernym of word b is found. As a result, synonym or hypernym chains for word a are created.

Assume here that P is a hypernym for Q, and that Q is a hypernym for R. In this case, two "isa" trees are created. In the present invention, in order to know the hypernym for R, when R is entered into the table, one of the "isa" trees is used to find the direct hypernym for R, and the other "isa" tree is subsequently used to find the direct hypernym P for Q, and thereby to find all the hypernyms for R.

In the foregoing example, the "isa" trees include just two words: the hypernym and the hyponym. Therefore, it is note.d that the ID data of the "isa" trees containing incoming words as hyponyms are important and that information on the location of the hyponyms in the trees is not indispensable.

A single "isa" tree may contain the foregoing P, Q, and R in other examples. In this case, it is noted that not only the ID data of an "isa" tree containing an word should be entered into the table as a hyponym, but that information on the location of the hyponym in the tree is also indispensable.

Subsequently, in order to search for a path between two words, it is necessary to check whether any dependency is present between words, one of which appears in one synonym/hypernym chain and the other of which appears in the other chain. This means checking whether a set of dependency trees containing a word contained in one of the chains and a set of dependency trees containing a word contained in the other chain have a common dependency tree, and whether any dependency or any dependency transition exists between the two words in the tree. In the dependency trees, the node locations of the two words in the trees are used to check whether any dependency between words or any transition between them exists. Here, when a first word modifies a second word indirectly through a third word, the transition of dependency exists between the first and the second words.

For example, for the dependency in which word d modifies word b, the position (0) of b and the position (010) of d in a common element t110 between a set of dependency structure trees {t30(1), t110(0)} containing b and a set of dependency structure trees {t40(10), t110(010)} containing d reveal that b is an ancestor of d. In other words, this reveals that a transition of the dependency exists between b and d (see Figure 13).

In the tree structure, when node a is an ancestor of node b, the route from b to a is determined uniquely. Therefore, discovery of a dependency is deemed to be equivalent to checking a positional relationship. The presence or absence of a path between words can be found by using the "isa" trees to obtain all their synym/hypernym chains by then obtaining an element included commonly in sets of dependency structure trees containing the words appearing in the chains, and by subsequently inspecting the positional relationship of the words in the trees. The path is obtained by tracing the trees containing the dependency. For example, one path between words a and c is shown in Figure 14.


2. Dependency Distance Calculation


Several constraint conditions are possible for paths, and the closeness of dependency between words can be computed according to these conditions. The degree of closeness of dependency is called the dependency distance. This is calculated according to the number of branches (dependencies) contained in the path and the values obtained as a result of evaluation of the constraints.

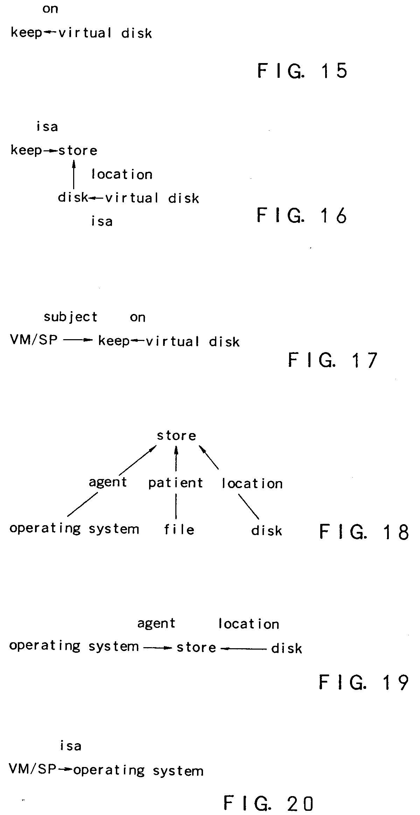

Constraint conditions are classifiable into three categories. The first is the condition constraint as to whether a semantic case label attached to a branch of a dependency in a path corresponds to a possible relationship in a candidate attachment (whether a certain word depends on a certain predicate as a subject or an object, and so on). For example, assume that the path shown in Figure 16 has been obtained for the dependency shown in Figure 15, of the sentence "VM/SP keeps the information on the virtual disk." The grammatical case (a case directly obtained from the sentence) between "keep" and "virtual disk" must then be consistent with the semantic case between "store" and "disk." Here, the case consistency between the dependency and the path holds, since the grammatical case "on" can have the semantic case "location" indicative of a location. If this case consistency holds between the dependency and the path, then the value of case consistency of the path is 1; otherwise, it is 0. In this example, the value of case consistency of the path is 1.

The second category of constraint condition is co-occurrence consistency, which is a constraint regarding the relationship between words co-occurring in the same sentence. For example, when a certain word depends on a certain predicate as an object, for instance, the subject of the predicate should be a specific word or its synonym/hypernym.

In the foregoing example, "VM/SP" is the subject of "keep," as shown in Figure 17. In contrast, assuming that the path of Figure 16 has been obtained from a dependency structure tree in the knowledge base as shown in Figure 18, co-occurrence is found as shown in Figure 19, and it is also found that "operating system" is an agent of "store." Further, if a taxonym relationship between "VM/SP" and "operating system" as shown in Figure 20 is defined as the knowledge, it is found that the co-occurrence consistency of words holds between the path and the sentence, as shown in Figure 21. Here, since the grammatical case "subject" can have the semantic case "agent," case consistency also holds. In this fashion, the number of co- occurrence consistencies (concurrent consistencies of words and cases) is the value of the co-occurrence consistency. In this example, the value of the co-occurrence consistency of the path is 1 (it is assumed that co-occurrence consistency for cases other than the subject does not hold).

The third category is context consistency. If dependencies between words appearing in a path already exist in previous sentences, the dependencies are considered to be firmly supported by the context, and the dependency distance on the path becomes close.

For example, if the sentence "In VM/SP, the data is stored in the storage device" comes before the above sentence, the.n the dependency structure shown in Figure 22 is stored as the context data of the knowledge base (the object herein referred to is not. a semantic case but a grammatical case indicative of an object). If a path is sought between "store" and ""disk" of the dependency "store disk" appearing in the path, using synonym/taxonym relationships and context dependencies of the knowledge base, then the path shown in Figure 23 is found, and it is found that the dependency between "store" and "disk" is defined in the context. Thus the number of dependencies contained in the path of Figure 16 and defined in the context is the value of context consistency. In this example, since one dependency is contained in the path, the value of context consistency of the path is 1.

The value of dependency distance is calculated by using the values of the foregoing constraints and the number of dependencies contained in the path. More specifically, it is computed from the following formula:

$$\text{dependency distance} = \frac{\text{number of dependencies}}{(\text{case consistency value} + 1)} + \frac{\text{context consistency value distance}}{(\text{co-occurrence consistency value} + 1)}$$

This formula assumes that case and co-occurrence consistency affect the entire path, but that context consistency affects each dependency included in the path. Here, n is a real number in the range $0 < n < 1$, and is a heuristic parameter that represents the degree of unimportance of the context. The dependency distance in the above example is 0.125 because the number of dependencies is 1, the value of case consistency is 1, that of co-occurrence consistency is 1, and that of context consistency is 1 (n is defined as 0.5).

REGISTRATION IN KNOWLEDGE BASE

The dependency structure that has been determined to be most preferable is registered in the knowledge base and is used for resolving structural ambiguities of subsequently input data. Since the result of the decision greatly depends on the context, it is preferable to register the result independently as context dependency data in order to distinguish it from learned data (see Figure 1). More specifically, a knowledge base that stores information on the dependency structure and the semantic case, as shown in Figure 7, and the index table in the right half of Table 2 are prepared for context dependency data for each field. When the most preferable dependency has been determined, corresponding data is added to the knowledge base and to the index table. Duplicate registration may be prevented by referring to a previously registered dependency.

Thus, knowledge can be increased automatically. In a strict sense, the method is not fully automatic, since human intervention is needed in some operations however, knowledge is increased at least semi-automatically.

PRACTICAL EXAMPLES

1. Syntactic Analysis of Input Sentence and Conversion into Dependency Structure:

Input sentence 1:

In VM/SP, the data is stored on the storage device. (This sentence has no structural ambiguity.)

9

```
Phrase structure ((DECL (PP      (PREP    "in")
                         (NOUN*   "vm/sp  ("vm/sp" SG))
                         (PUNC    ","))
               (NP       (DET     (ADJ*    "the" ("the" BS)))
                         (NOUN*   "data" ("data" (SG PL))))
               (VERB     "is"  ("be" PS))
               (VERB*    "stored"  ("store" (ED EN)))
               (PP       (PREP    "on")
                         (DET     (ADJ*    "the" ("the" BS)))
                         (NOUN*   "storage device" ("storage device" SG)))
               (PUNC     "."))     0)
```

Dependency structure

```
                              3 store
                                 |
          _____
         |                       |                           |
      1 vm/sp : (CONDITION) 2 data :(PATIENT) 4 storage device : LOCATION)
         |                       |
         |                       |
      word    semantic case label (if multiple labels are present,
              all possible ones are indicated) Input sentence 2:  VM/SP
```

keeps the information on the virtual disk.

                    (This sentence includes structural ambiguities.)


Phrase structure: ((DECL (NP      (NOUN*    "vm/sp   ("vm/sp" SG)))
        (VERB*   "keeps"   ("keep" PS))
        (NP      (DET      (ADJ*    "the" ("the" BS)))
                 (NOUN*    "information" ("information" SG))
         ?       (PP       (PREP     "on")
                 (DET      (ADJ*    "the" ("the" BS)))
                 (NOUN*    "virtual disk" ("virtual disk" SG))))
        (PUNC    "."))    0)


(a question mark indicates another dependency candidate)


Dependency structure

```
                      2 keep
                         |
          _____
         |                               |
      1 vm/sp : (AGENT)      3 information : (PATIENT)
                                          |
                          4 virtual disk : (LOCATION CONDITION) ! (2 3)
                                                                    |
                                                          modifiee candidate
```

The list of modifiee candidates (2 3) represents that the word ("virtual disk") can be attached to word 2 ("keep") or word 3 ("information").

11

2. Resolution of structural ambiguity

```
                    2 keep
                      |
        +-------------+-------------+
        |                           |
 1 vm/sp : (AGENT)        3 information : (PATIENT)
                                     |
                         4 virtual disk : (LOCATION CONDITION) ! (2 3)
```

In the dependency tree, two dependency candidates "information" <- "virtual disk" and "keep" <- "virtual disk" are found from the node "virtual disk." A path search is performed, and then the dependency distance is computed first for the dependency "information" <- "virtual disk."
Path: ((T421 (tree ID in the knowledge base)) (("information")0) (("virtual disk" "disk")00) This path is shown below:

```
                   information
                     |   location
                   disk <- virtual disk
                         isa
```

Number of dependencies in the path: 1
Value of case consistency: 1
Value of co-occurrence consistency: 0
Value of context consistency: 0
Dependency distance: 0.5
Dependency distance of "information" <- "virtual disk" is 0.5.
   Subsequently, the same processing is done regarding the dependency "keep" <- "virtual disk."
   Path: ((T425) (("keep" "store")) (("virtual disk" "disk")2))

```
            This path is shown below:


                    isa
           keep -> store
                     |   location
                   disk <- virtual disk
                         isa
```

Number of dependencies in the path: 1
Value of case consistency: 1
This path is obtained from the following dependency structure:

```
                        2 store
                          |
        +-----------------+-----------------+
        |                 |                 |
 1 operating system : AGENT  3 file : PATIENT   4 disk :  LOCATION
```

List of co-occurring words in the sentence: ("vm/sp" . AGENT) ("information" . PATIENT)) List of co-occurring words in the path: (("operating system" . AGENT) ("file" . PATIENT)) Value of co-occurrence consistency: 1 Context path: (((T426) ("store")) (("disk" "storage device")2)) This context path is shown below (this is obtained from the dependency of the preceding sentence):

```
        store

          |  location

    storage device <- disk

                    isa Value of context consistency:  1 Dependency
```

distance: 0.125
Dependency distance of "keep" <- "virtual disk" is 0.125.
In other words, the dependency "keep" <- "virtual disk" is found to be most preferable, and the dependency structure is modified as follows:

```
                        2 keep
                           |
         _____|_____
        |                  |                         |
   1 vm/sp : AGENT   3 information : PATIENT  4 virtual disk : LOCATION
```

EXPERIMENTAL RESULTS

The ability of the present invention system to resolve prepositional attachment ambiguities, has been tested by using approximately 2,000 sentences, extracted from a computer manual. The result is shown below. The knowledge used here consists of the dependency structures extracted from about 20,000 definition sentences in the "IBM Dictionary of Computing."

| Total number of prepositional phrases | Number of attachments correctly disambiguated by the system |
|---|---|
| 4290 | 3569 |
| Success ratio | 4290/3569 x 100 = 83.2% |

The results show that the system is significantly effective.

Table 1.  Examples of semantic case

| Semantic case | Role |
|---|---|
| Agent | Person who causes a certain action |
| Patient | Person who experiences a certain event |
| Instrument | Cause of a certain event, or stimulation causing a certain reaction |
| Object | Object to be moved, object to be changed, and contents of consideration or other psychological movement |
| Source | Starting point for movement of an object, initial aspect of a change in a state |
| Target | Terminal point for movement of an object, terminal aspect of a change in a state |
| Location | Location and position of a certain event |
| Time | Time at which a certain event occurs |

Table 2.  Index table

| Words | isa trees | | | Dependency trees | |
|---|---|---|---|---|---|
| a | t0(0) | t10(0) | t22(0) | t101(0 1) | t150(1 0) |
| b | t5(1) | t52(0) | t62(0) | t30(1) | t110(0) |
| c | t2(0) | t15(0) | t72(1) | t101(1 1) | t350(0 2 3) |
| d | t8(1) | t25(1) | t82(0) | t40(1 0) | t110(0 1 0) |
| ... | ..................... | | | ..................... | |

The present invention allows large-scale knowledge for resolution of structural ambiguities in natural language to be constructed and used efficiently.

## Claims

1. Apparatus for natural language analysis, the apparatus comprising:

knowledge base means for storing first-type trees representing dependencies among words in sentences, and second-type trees representing taxonym relationships of words;

table means responsive to entry of a word to output ID data of said first-type tree in which said word appears, node location data of said word in said first-type tree, and to output ID data of said second-type tree in which said word is contained as a hyponym;

means for judging the structural ambiguity of an incoming sentence;

means for extracting a candidate pair of modifier and modifiee for each possible dependency for a sentence judged to be ambiguous structurally;

means for entering words comprising each said pair into said table means and for determining, on the basis of the output data, a path including said words at opposite ends and including some of the words appearing in the first-type tree;

means for calculating a path distance for each said pair; and

means for determining a most preferable dependency on the basis of said path distance calculated for each.

2. Apparatus as claimed in claim 1, further comprising: means for storing in said knowledge base means a first-type tree for the incoming sentence including said most preferable dependency determined by said means for determining and for renewing said table means responsively.

3. Apparatus as claimed in claim 2 wherein said knowledge base means separately stores learned data and context data added by said means for storing.

4. Apparatus as claimed in claim 2 wherein said table means is separately prepared for learned data and for context data.

5. Apparatus as claimed in claim 1 wherein said means for calculating calculates said distance, based on the number of dependencies included in the path.

6. Apparatus as claimed in claim 1 wherein said first-type tree is provided with semantic case data for each dependency.

7. Apparatus as claimed in claim 6 wherein said means for calculating calculates said distance according to the consistency between the case relationship between a modifier and a candidate modifiee and the case relationship for the path.

8. Apparatus as claimed in claim 1 wherein said means for calculating calculates said distance, on the basis of the consistency of co-occurrence of a word included in said incoming sentence and a word included in said first-type tree for the path.

9. Apparatus as claimed in claim 1 wherein said means for calculating calculates said distance, on the basis of the degree of consistency between the path and a first-type tree. added by said means for determining.

10. Apparatus as claimed in claim 1 wherein said second-type tree is an "isa" tree having only two nodes corresponding to a hypernym and a hyponym, and wherein said means for entering is responsive to an output of a hypernym of a word forming the pair, to iterate search for an "isa" tree including said hypernym as a hyponym, thereby producing a chain of hypernyms.

11. Apparatus as claimed in claim 1 wherein wherein a synonym relationship is represented by two "isa" trees.

12. In a computer system including a knowledge base that stores first-type trees representing dependencies among words in sentences and second-type trees representing taxonym relationships of words, and including a table responsive to entry of a word for outputting ID data of said first-type tree in which said word appears, node location data of said word in said first-type tree, and ID data of said second-type tree in which said word appears as a hyponym, a natural language analysis method comprising the steps of:
    (a) judging the structural ambiguity of an incoming sentence;
    (b) extracting a candidate pair of modifier and modifiee for each possible dependency as for a sentence judged to be structurally ambiguous;
    (c) entering words comprising each pair into said table means and determining, on the basis of the output data, a path that has said words at opposite ends and contains some of the words appearing in said first-type tree;
    (d) calculating a path distance for each pair; and
    (e) determining the most preferable dependency relationship, on the basis of said path distance calculated for each said pair.

13. A method of constructing a knowledge base for natural language analysis comprising the steps of:
    (a) preparing a knowledge base for storing trees representing dependencies among words in sentences and preparing a table responsive to entry of a word for outputting ID data of a tree containing said word and node location data of said word in said tree;
    (b) determining the most preferable of the possible dependencies for an incoming sentence by using said knowledge base and said table; and
    (c) storing in said knowledge base a tree for the incoming sentence that includes said most preferable dependency and renewing said table responsively.

INCOMING SENTENCE

↓

```
┌─────────────────────────┐
│ SYNTACTIC ANALYZER      │
│ (PARSER)                │
└─────────────────────────┘
```

↓

PHRASE STRUCTURE
INCLUDING AMBIGUITY

↓

```
┌──────────────────────────────────┐
│ DEPENDENCY ANALYZER              │
│                                  │
│  ┌────────────────────────┐      │
│  ╎ DEPENDENCY             ╎      │
│  ╎ STRUCTURE              ╎      │
│  ╎ BUILDER                ╎      │
│  ╎                        ╎      │
│  ╎ DEPENDENCY             ╎      │
│  ╎ EXTRACTOR              ╎      │
│  ╎                        ╎      │
│  ╎ DEPENDENCY             ╎      │
│  ╎ SELECTOR               ╎      │
│  ╎                        ╎      │
│  ╎ DEPENDENCY             ╎      │
│  ╎ STRUCTURE              ╎      │
│  ╎ TRANSFORMER            ╎      │
│  └────────────────────────┘      │
└──────────────────────────────────┘
```

```
┌---- KNOWLEDGE BASE ----┐
╎                        ╎
╎  ┌──────────────────┐  ╎
╎  │ DEPENDENCY/      │  ╎
╎  │ TAXONYM/         │  ╎
╎  │ SYNONYM DATA     │  ╎
╎  └──────────────────┘  ╎
╎                        ╎
╎  ┌──────────────────┐  ╎
╎  │ CONTEXT          │  ╎
╎  │ DEPENDENCY       │  ╎
╎  │ DATA             │  ╎
╎  └──────────────────┘  ╎
└------------------------┘
```

↓

DEPENDENCY STRUCTURE
WITHOUT AMBIGUITY

↓

```
┌-----------------------------------------------------┐
╎ SYSTEM FOR NATURAL LANGUAGE APPLICATION             ╎
╎ SUCH AS MACHINE TRANSLATION                         ╎
└-----------------------------------------------------┘
```

F I G. 1

16

```
                    S
              NP          VP ---
             /\          /\      \
            /__\        /__\      \         F I G. 2
        VM/SP        keeps      NP
                              /_____\
                          the information    PP
                                            /_____\
                                         on the virtual disk
```

```
            keep  <----
           /    \       \
          /      \        \          F I G. 3
       VM/SP   information  \
                     \       /
                      \     /
                   virtual disk
```

```
     information              keep
          ↑                    ↑
          |                    |
     virtual disk         virtual disk
```

F I G. 4

```
                    S
              NP          VP ---
             /____\      /\      \
            /      \    /__\      \
      operating system store    NP
                              /\     \
                             /__\     \
                            file      PP
                                    /_____\
                                   on the disk
```

F I G. 5

store

operating system    file

disk

F I G. 6

store

agent   patient   location

operating system   file        disk

F I G. 7

"CMS  is an operating system."

operating system
↑ isa
CMS

F I G. 8

"Authorized program is a synonym for privileged program."

privileged program
↑ isa
authorized program

authorized program
↑ isa
privileged program

F I G. 9

SYNONYM

keep ──► store
↑ DEPENDENCY
disk ◄── virtual disk
HYPERNYM

F I G. 1 0

FIG. 11

FIG. 12

FIG. 13

FIG. 14

on
keep◄─virtual disk

F I G. 1 5

isa
keep─►store
         ▲
         │ location
    disk◄─virtual disk
         isa

F I G. 1 6

subject        on
VM/SP ──► keep◄─virtual disk

F I G. 1 7

store

agent    patient   location

operating system    file        disk

F I G. 1 8

agent          location
operating system ──► store ──── disk

F I G. 1 9

isa
VM/SP─►operating system

F I G. 2 0

20

agent     location

operating system ⟶ store ⟵ disk    ⟵ PATH

↑isa    ↑isa    ↑isa

VM/SP ⟶ keep ⟵ virtual disk ⟵ SENTENCE

subject    on

F I G. 2 1

store

in  object  on

VM/SP    data    storage device

F I G. 2 2

on        isa

store ⟵ storage device ⟵ disk

F I G. 2 3

HOST COMPUTER    DASD

TERMINAL

F I G. 24